# EUROPEAN PATENT APPLICATION

(11) **EP 4 797 847 A1**
(43) Date of publication of application: **26.08.2026**
(21) Application number: 24890684.4
(22) Date of filing: 12.11.2024
(51) Int. Cl.: H04W 72/232

(54) **COMMUNICATION METHOD AND COMMUNICATION APPARATUS**

(30) Priority: 13.11.2023 CN 202311508900
(71) Applicant: Huawei Technologies Co., Ltd., Shenzhen, Guangdong 518129 (CN)
(72) Inventor: HUA, Meng, Shenzhen, Guangdong 518129 (CN); GAO, Fei, Shenzhen, Guangdong 518129 (CN); HUANG, Xiuxuan, Shenzhen, Guangdong 518129 (CN); DING, Mengying, Shenzhen, Guangdong 518129 (CN)
(74) Representative: Isarpatent
(86) International application number: PCT/CN2024/131649
(87) International publication number: WO 2025/103329

(57) **Abstract**

This application provides a communication method and a communication apparatus. The communication method includes: When a first PDCCH candidate is capable of being used to carry first DCI, a terminal device performs, in a first cell, blind detection BD counting or non-overlapping control channel element CCE counting on the first PDCCH candidate, where the first DCI is DCI in a first format, one piece of DCI in the first format is used to schedule data transmission in a maximum of one cell, the first DCI is used to schedule data transmission in a second cell, and the first cell is different from the second cell.

## Description

This application claims priority to Chinese Patent Application No. 202311508900.2, filed with the China National Intellectual Property Administration on November 13, 2023 and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication method and a communication apparatus.

### BACKGROUND

Two operations in physical downlink control channel (physical downlink control channel, PDCCH) monitoring have great impact on implementation complexity of a terminal device. One is a quantity of monitored PDCCH candidates, which is also referred to as a quantity of blind detection (blind detection, BD). The other is a quantity of non-overlapping control channel elements (control channel elements, CCEs). A larger quantity of PDCCH candidates monitored by a terminal device indicates higher decoding complexity of the terminal device. A larger quantity of non-overlapping CCEs in the PDCCH candidates monitored by a terminal device indicates higher channel estimation complexity of the terminal device.

To reduce complexity of monitoring a PDCCH by the terminal, an upper limit of a quantity of PDCCH candidates and/or an upper limit of a quantity of non-overlapping CCEs monitored by a terminal device in a cell per time unit are/is preset in a protocol. The upper limit of the quantity of PDCCH candidates is also referred to as a BD upper limit, and the upper limit of the quantity of non-overlapping CCEs is also referred to as a CCE upper limit.

In a current protocol, an access network device and a terminal device perform, in a cell scheduled by DCI in a first format, BD counting and/or non-overlapping CCE counting on a PDCCH candidate that is capable of being used to carry the DCI in the first format. One piece of DCI whose format is the first format is used to schedule data transmission in a maximum of one carrier. However, this manner has low flexibility of scheduling the PDCCH by the access network device.

### SUMMARY

This application provides a communication method, to improve flexibility of scheduling a PDCCH by an access network device.

According to a first aspect, this application provides a communication method, applied to a terminal device, and including: when a first PDCCH candidate is capable of being used to carry first DCI, performing, in a first cell, blind detection BD counting and/or non-overlapping control channel element CCE counting on the first PDCCH candidate, where the first DCI is DCI in a first format, one piece of DCI in the first format is used to schedule data transmission in a maximum of one cell, the first DCI is used to schedule data transmission in a second cell, and the first cell is different from the second cell. In other words, the first PDCCH candidate is capable of being used to carry the first DCI that is in the first format and that is used to schedule the second cell.

In embodiments of this application, a PDCCH candidate that is capable of being used to carry the first DCI is also referred to as a PDCCH candidate associated with the first DCI.

That one piece of DCI in the first format schedules data transmission in a maximum of one cell may also be described as that one piece of DCI in the first format is used to schedule data transmission in a maximum of one carrier, or one piece of DCI is one piece of DCI in the first format and is used to schedule data transmission in a maximum of one cell, or one piece of DCI is one piece of DCI in the first format and is used to schedule data transmission in a maximum of one carrier. In other words, the first format may be considered as a single-cell scheduling DCI format, or is also referred to as a single-carrier scheduling DCI format.

In other words, in this embodiment, the terminal device performs, in the first cell, BD counting and/or non-overlapping CCE counting on the PDCCH candidate that is capable of being used to carry the DCI that is in the first format and that is used to schedule data transmission in the second cell. That is, the terminal device performs, in the first cell, BD counting and/or non-overlapping CCE counting on a PDCCH candidate associated with the DCI that is in the first format and that is used to schedule data transmission in the second cell.

It should be understood that, when BD counting and/or non-overlapping CCE counting are/is performed in the first cell on the PDCCH candidate that is capable of being used to carry the DCI that is in the first format and that is used to schedule data transmission of the second cell, more BD and/or non-overlapping CCEs can be provided for PDCCH candidates that can be used to carry the DCI in a second format and on which BD counting and/or non-overlapping CCE counting needs to be performed in the second cell. One piece of DCI in the second format is capable of being used to simultaneously schedule data transmission in two or more cells, that is, the second format may be considered as a multi-cell scheduling DCI format. Therefore, according to the communication method provided in embodiments of this application, scheduling flexibility of the PDCCH candidate that is capable of being used to carry the DCI in the second format can be improved, that is, flexibility of scheduling the PDCCH by the access network device is improved.

With reference to the first aspect, in a possible implementation, the method further includes: receiving first information sent by an access network device, where the first information indicates the terminal device to perform, in the first cell, BD counting and/or non-overlapping CCE counting on a PDCCH candidate that is capable of being used to carry the first DCI. In other words, the first information indicates that the terminal device to perform, in the first cell, BD counting and/or non-overlapping CCE counting on a PDCCH candidate that is capable of being used to carry the DCI that is in the first format and that is used to schedule the second cell.

In this implementation, the access network device sends the first information to the terminal device, to indicate the terminal device to perform, in the first cell, BD counting and/or non-overlapping CCE counting on the PDCCH candidate associated with the DCI that is in the first format and that is used to schedule data transmission in the second cell. In other words, the access network device sends the first information to the terminal device, to indicate BD counting and/or non-overlapping CCE counting on the PDCCH candidate associated with the DCI that is in the first format and that is used to schedule data transmission in the second cell are/is performed by the terminal device in the first cell.

In other words, in this implementation, after receiving the first information, the terminal device performs, in the first cell, blind detection BD counting and/or non-overlapping CCE counting on the first PDCCH candidate based on an indication of the first information.

With reference to the first aspect, in a possible implementation, performing, in the first cell, blind detection BD counting and/or non-overlapping control channel element CCE counting on the first PDCCH candidate includes: if BD counting and/or non-overlapping CCE counting are/is performed, in the second cell, on a PDCCH candidate that is capable of being used to carry second DCI, performing, in the first cell, BD counting and/or non-overlapping CCE counting on the first PDCCH candidate. The second DCI is DCI in a second format, and one piece of DCI in the second format is capable of being used to simultaneously schedule data transmission in two or more cells.

The second format is a multi-cell scheduling DCI format, or may be referred to as a multi-carrier scheduling DCI format.

In embodiments of this application, that one piece of DCI in the second format can simultaneously schedule data transmission in two or more cells may also be described as that one piece of DCI in the second format can simultaneously schedule data transmission in two or more carriers.

In embodiments of this application, a cell that can be scheduled by using one piece of DCI in the second format includes the second cell, and BD counting and/or non-overlapping CCE counting is performed, in the second cell, on a PDCCH candidate that is capable of being used to carry the second DCI.

In other words, this implementation further limits a case in which, only when the second cell is a cell of counting BD and/or non-overlapping CCEs on a PDCCH candidate that can be used to carry the DCI in the second format, BD counting and/or non-overlapping CCE counting are/is performed, in the first cell, on the first PDCCH candidate. In other words, in this implementation, if BD counting and/or non-overlapping CCE counting are/is not performed, in the second cell, on a PDCCH candidate that is capable of being used to carry the second DCI, BD counting and/or non-overlapping CCE counting are/is not performed, in the first cell, on the first PDCCH candidate.

With reference to the first aspect, in a possible implementation, performing, in the first cell, blind detection BD counting and/or non-overlapping control channel element CCE counting on the first PDCCH candidate includes: if the first PDCCH candidate and a PDCCH candidate that is capable of being used to carry third DCI are in a same cell, performing, in the first cell, BD counting and/or non-overlapping CCE counting on the first PDCCH candidate. The third DCI is DCI in the first format, and the third DCI is used to schedule data transmission in the first cell. That the first PDCCH candidate and the PDCCH candidate that is capable of being used to carry the third DCI are in a same cell may be understood as that the first PDCCH candidate and the PDCCH candidate that is capable of being used to carry the third DCI are on a same bandwidth part BWP of the same cell, and the BWP may be an active downlink BWP of the cell.

That is, this implementation further limits a case in which, only when the PDCCH candidate associated with the DCI that is in the first format and that is used to schedule the second cell and the PDCCH candidate associated with the DCI that is in the first format and that is used to schedule the first cell are in a same cell, the terminal device performs, in the first cell, BD counting and/or non-overlapping CCE counting on the PDCCH candidate associated with the DCI that is in the first format and that is used to schedule the second cell, or the terminal device performs, in the first cell, BD counting and/or non-overlapping CCE counting on the first PDCCH candidate. In other words, in this implementation, if the first PDCCH candidate and a PDCCH candidate that is capable of being used to carry the third DCI are not in a same cell, BD counting and/or non-overlapping CCE counting are not performed, in the first cell, on the first PDCCH candidate.

With reference to the first aspect, in a possible implementation, performing, in the first cell, blind detection BD counting and/or non-overlapping control channel element CCE counting on the first PDCCH candidate includes: if a subcarrier spacing of the first PDCCH candidate is the same as a subcarrier spacing of a PDCCH candidate that is capable of being used to carry fourth DCI, performing, in the first cell, BD counting and/or non-overlapping CCE counting on the first PDCCH candidate. The fourth DCI is DCI in the first format, and the fourth DCI is used to schedule data transmission in the first cell.

In other words, in this implementation, only when the subcarrier spacing of the first PDCCH candidate is the same as the subcarrier spacing of the PDCCH candidate that is capable of being used to carry the fourth DCI, the terminal device performs, in the first cell, BD counting and/or non-overlapping CCE counting on the PDCCH candidate associated with the DCI that is in the first format and that can be used to schedule the second cell, or the terminal device performs, in the first cell, BD counting and/or non-overlapping CCE counting on the first PDCCH candidate. In other words, in this implementation, if the subcarrier spacing of the first PDCCH candidate is different from the subcarrier spacing of the PDCCH candidate that is capable of being used to carry the fourth DCI, BD counting and/or non-overlapping CCE counting is not performed, in the first cell, on the first PDCCH candidate. In other words, in this implementation, the first PDCCH candidate and the PDCCH candidate that is capable of being used to carry the fourth DCI are on an active downlink BWP of a same cell, or the first PDCCH candidate is on an active downlink BWP of a cell, a PDCCH candidate that is capable of being used to carry the fourth DCI is on an active downlink BWP of another cell, and subcarrier spacings of the two active downlink BWPs are the same.

With reference to the first aspect, in a possible implementation, the method further includes: receiving second information sent by the access network device, where the second information is used to configure at least one first PDCCH candidate. The second information is determined based on a BD upper limit corresponding to the first cell and/or a non-overlapping CCE upper limit corresponding to the first cell. The second information includes one or more aggregation levels of PDCCH candidates that can carry the DCI that is in the first format and that is used to schedule data transmission in the second cell, and a quantity of PDCCH candidates at each aggregation level. The terminal device may determine, based on the second information, a time-frequency resource of a PDCCH candidate that can carry the DCI that is in the first format and that is used to schedule data transmission in the second cell. For example, the second information may be search space set configuration information. It should be noted that there is no strict sequence between the first information and the second information. The first information may be sent earlier than the second information, or may be sent later than the second information, or the first information and the second information may be sent simultaneously.

Specifically, the BD upper limit is an upper limit of a quantity of PDCCH candidates that are monitored by the terminal device and that are counted by the terminal device in a unit time in the first cell, and the non-overlapping CCE upper limit is an upper limit of a quantity of non-overlapping CCEs that are monitored by the terminal device and that are counted by the terminal device in a unit time in the first cell.

According to a second aspect, this application provides a communication method, applied to an access network device, and including: sending first information to a terminal device, where the first information indicates the terminal device to perform, in a first cell, BD counting and/or non-overlapping CCE counting on a PDCCH candidate that is capable of being used to carry first DCI. The first DCI is DCI in a first format, one piece of DCI in the first format is used to schedule data transmission in a maximum of one cell, the first DCI is used to schedule data transmission in a second cell, and the first cell is different from the second cell.

With reference to the second aspect, in a possible implementation, the method further includes: when a first PDCCH candidate is capable of being used to carry the first DCI, performing, in the first cell, blind detection BD counting and/or non-overlapping control channel element CCE counting on the first PDCCH candidate.

With reference to the second aspect, in a possible implementation, performing, in the first cell, blind detection BD counting and/or non-overlapping control channel element CCE counting on the first PDCCH candidate includes: if BD counting and/or non-overlapping CCE counting are/is performed, in the second cell, on a PDCCH candidate that is capable of being used to carry second DCI, performing, in the first cell, BD counting and/or non-overlapping CCE counting on the first PDCCH candidate. The second DCI is DCI in a second format, and one piece of DCI in the second format is capable of being used to simultaneously schedule data transmission in two or more cells.

With reference to the second aspect, in a possible implementation, performing, in the first cell, blind detection BD counting and/or non-overlapping control channel element CCE counting on the first PDCCH candidate includes: if the first PDCCH candidate and a PDCCH candidate that is capable of being used to carry third DCI are in a same cell, performing, in the first cell, BD counting and/or non-overlapping CCE counting on the first PDCCH candidate. The third DCI is DCI in the first format, and the third DCI is used to schedule data transmission in the first cell.

With reference to the second aspect, in a possible implementation, performing, in the first cell, blind detection BD counting and/or non-overlapping control channel element CCE counting on the first PDCCH candidate includes: if a subcarrier spacing of the first PDCCH candidate is the same as a subcarrier spacing of a PDCCH candidate that is capable of being used to carry fourth DCI, performing, in the first cell, BD counting and/or non-overlapping CCE counting on the first PDCCH candidate. The fourth DCI is DCI in the first format, and the fourth DCI is used to schedule data transmission in the first cell.

With reference to the second aspect, in a possible implementation, the method further includes: sending second information to the terminal device, where the second information is used to configure at least one first PDCCH candidate. The second information is determined based on a BD upper limit corresponding to the first cell and/or a non-overlapping CCE upper limit corresponding to the first cell.

According to a third aspect, this application provides a communication apparatus, including a memory, configured to perform the method according to any one of the first aspect or the possible implementations of the first aspect.

With reference to the third aspect, in a possible implementation, the communication apparatus further includes a processor. The memory is configured to store program instructions. The processor is configured to invoke the program instructions in the memory to perform the method according to any one of the first aspect or the possible implementations of the first aspect.

According to a fourth aspect, this application provides a communication apparatus, including a memory, configured to perform the method according to any one of the second aspect or the possible implementations of the second aspect.

With reference to the fourth aspect, in a possible implementation, the communication apparatus further includes a processor. The memory is configured to store program instructions. The processor is configured to invoke the program instructions in the memory to perform the method according to any one of the second aspect or the possible implementations of the second aspect.

According to a fifth aspect, this application provides a communication system, including the communication apparatus according to the third aspect and the communication apparatus according to the fourth aspect.

According to a sixth aspect, this application provides a computer-readable medium. The computer-readable medium stores program code for computer execution, and the program code includes instructions used to perform the method according to any one of the first aspect, the second aspect, or the possible implementations of the first aspect or the second aspect.

According to a seventh aspect, this application provides a chip system, including at least one processor and a communication interface. The communication interface and the at least one processor are interconnected through a line. The at least one processor is configured to run a computer program or instructions, to perform the method according to any one of the first aspect, the second aspect, or the possible implementations of the first aspect or the second aspect.

According to an eighth aspect, this application provides a computer program product. The computer program product includes computer program code. When the computer program code is run on a computer, the computer is enabled to implement the method according to any one of the first aspect, the second aspect, or the possible implementations of the first aspect or the second aspect.

For technical effect brought by any one of the implementations of the second aspect to the eighth aspect, refer to the technical effect brought by any one of the first aspect and the possible implementations. Details are not described again.

### BRIEF DESCRIPTION OF DRAWINGS

FIG. 1 is a diagram of a communication system to which an embodiment of this application is applicable;
FIG. 2 is a diagram of performing BD counting or non-overlapping CCE counting according to an embodiment of this application;
FIG. 3 is a schematic flowchart of a communication method according to an embodiment of this application;
FIG. 4 is a diagram of performing BD counting or non-overlapping CCE counting according to an embodiment of this application;
FIG. 5 is a schematic flowchart of a communication method according to another embodiment of this application;
FIG. 6 is a diagram of a structure of a communication apparatus according to an embodiment of this application; and
FIG. 7 is a diagram of a structure of a communication apparatus according to another embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, first information and second information are merely used for distinguishing between different information, and do not limit a sequence of the first information and the second information. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the word "example" or "for example" is intended to present a related concept in a specific manner.

Embodiments of this application provide a communication method and apparatus. The method and the apparatus are based on a same technical concept. The method and the apparatus have similar problem-resolving principles. Therefore, mutual reference may be made to implementations of the apparatus and the method. Repeated parts are not described again.

The technical solutions provided in embodiments of this application may be applied to various communication systems. For example, the communication system to which the technical solutions are applied may be a global system for mobile communications (global system for mobile communications, GSM), a code division multiple access (code division multiple access, CDMA) system, a wideband code division multiple access (wideband code division multiple access, WCDMA) system, a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, a universal mobile telecommunications system (universal mobile telecommunications system, UMTS), a fifth generation mobile communication system, and some future communication systems (for example, a sixth generation mobile communication system).

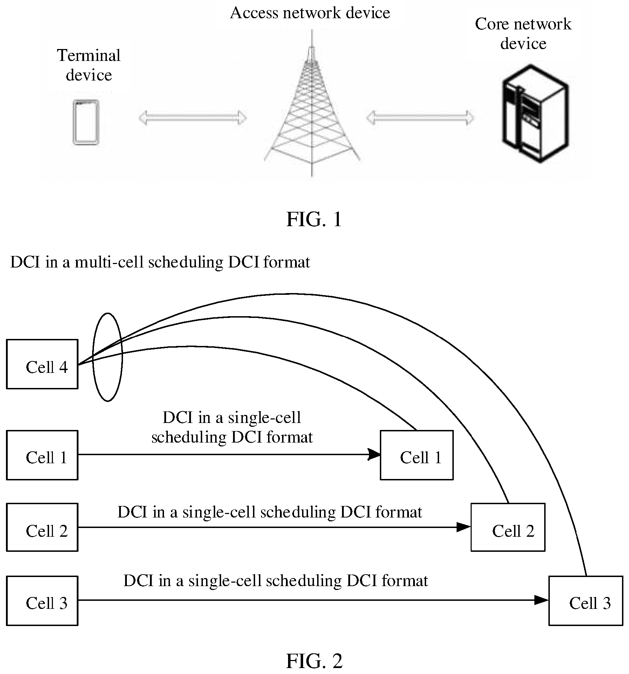

With reference to FIG. 1, a communication system applicable to the communication method provided in this application is described by using an example. As shown in FIG. 1, the communication system includes a terminal device, an access network device, and a core network device. The terminal device is connected to the access network device in a wireless manner, and the access network device is connected to the core network device in a wireless or wired manner.

The terminal device may be a device that provides a user with voice and/or data connectivity, for example, a handheld device or a vehicle-mounted device with a wireless connection function. The terminal device may also be referred to as user equipment (user equipment, UE), an access terminal (access terminal), a user unit (user unit), a user station (user station), a mobile station (mobile station), a mobile (mobile), a remote station (remote station), a remote terminal (remote terminal), mobile equipment (mobile equipment), a user terminal (user terminal), wireless telecom equipment (wireless telecom equipment), a user agent (user agent), user equipment (user equipment), or a user apparatus. The terminal device may be a station (station, STA) in a wireless local area network (wireless local area network, WLAN), or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a compute device or another processing device connected to a wireless modem, a vehicle-mounted device, a wearable device, a terminal in a next-generation communication system (for example, a fifth-generation (fifth-generation, 5G) communication network), or a terminal device in a future evolved public land mobile network (public land mobile network, PLMN) network, or the like. 5G may also be referred to as new radio (new radio, NR). In a possible application scenario of this application, the terminal device may alternatively be a terminal device that often operates on land, for example, a vehicle-mounted device. In this application, for ease of description, a chip deployed in the foregoing device, or a chip may also be referred to as a terminal device.

The access network device may be any device having a wireless transceiver function. The device includes but is not limited to an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), and the like. Alternatively, the device may be a gNB or a transmission point (TRP or TP) in a 5G system, for example, an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at a physical layer, or is converted from information at a physical layer. Therefore, in this architecture, higher layer signaling, for example, RRC layer signaling, may also be considered to be sent by the DU or sent by the DU and the CU. It may be understood that the network device may be a CU node, a DU node, or a device including a CU node and a DU node. In addition, the CU may be classified into a network device in an access network (radio access network, RAN), or the CU may be classified into a network device in a core network (core network, CN). This is not limited in this application.

In embodiments of this application, terms "terminal device" and "UE" may be interchanged, and terms "base station" and "access network device" may also be interchanged.

In this application, the access network device and the terminal device may communicate with each other through a licensed spectrum, or may communicate with each other through an unlicensed spectrum, or may communicate with each other through both a licensed spectrum and an unlicensed spectrum. The access network device and the terminal device may communicate with each other through a spectrum below 6 gigahertz (gigahertz, GHz), a spectrum above 6 GHz, or both the spectrum below 6 GHz and the spectrum above 6 GHz. Spectrum resources used between the access network device and the terminal device are not limited in embodiments of this application.

Specifically, information exchanged between the terminal device and the access network device is carried on a physical channel. Control information sent by the access network device to the terminal device, for example, downlink control information (downlink control information, DCI) may be carried on a physical downlink control channel (physical downlink control channel, PDCCH); data sent by the access network device to the terminal device, that is, downlink data, may be carried on a physical downlink shared channel (physical downlink shared channel, PDSCH); and data sent by the terminal device to the access network device, that is, uplink data, may be carried on a physical uplink shared channel (physical uplink shared channel, PUSCH). The physical channel used to carry the DCI may alternatively be a channel with another name, for example, an enhanced physical downlink control channel (enhanced physical downlink control channel, EPDCC); the channel used to carry the downlink data at the physical layer may be a channel with another name other than the PDSCH; and the channel used to carry the uplink data at the physical layer may be a channel with another name other than the PUSCH. This is not limited in embodiments of this application.

The core network device mainly includes a user plane function (user plane function, UPF) and a control plane function of a data plane. The core network device and the access network device may be different physical devices that are independent of each other, functions of the core network device and logical functions of the access network device may be integrated into a same physical device, or a part of the functions of the core network device and a part of the functions of the access network device may be integrated into one physical device.

It may be understood that a quantity of terminal devices shown in FIG. 1 is merely an example. In an actual process, there may be another quantity of terminal devices.

In embodiments of this application, the terminal device or the access network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application. For example, the method provided in embodiments of this application may be performed by a terminal device or a network device, or may be performed by a functional module that is in the terminal device or the network device and that can invoke a program and execute the program.

In addition, methods in aspects of this application may be implemented through programming, and a computer program that can be accessed by a computer-readable component, carrier, or medium is formed. For example, the computer-readable medium may include but is not limited to: a magnetic storage component (for example, a hard disk drive, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

It should be understood that FIG. 1 is merely an example, and the communication system may further include another network device. Details are not described herein again.

For ease of understanding of embodiments of this application, terms that may be used in embodiments of this application are first described before embodiments of this application are described.

### 1. Bandwidth part (bandwidth part, BWP)

In a wireless communication system, for example, an NR communication system, an access network device may configure a BWP for a terminal device, and the terminal device and the access network device exchange information on the BWP.

The BWP may be understood as a frequency domain operating interval configured by the access network device for the terminal device, and includes a frequency domain range, a subcarrier spacing, and the like. One BWP may be used only for uplink data transmission, and the BWP may be referred to as an uplink BWP; or one BWP may be used to only for downlink data transmission, and the BWP may be referred to as a downlink BWP. For a time division duplex system, the uplink BWP and the downlink BWP are usually configured in pairs, and have a same center frequency. The access network device may configure one or more BWPs for the terminal device. On the downlink BWP, the terminal device may receive one or more of the following channels from the access network device: a PDCCH, a PDSCH, and an uplink demodulation reference signal. On the uplink BWP, the terminal device may send one or more of the following channels to the network device: a PUSCH, a PUCCH, and a downlink demodulation reference signal.

### 2. Subcarrier spacing (subcarrier spacing, SCS)

There are five subcarrier spacings in an NR system. Values of subcarrier spacing configuration parameters µ range from 0 to 4, and respectively correspond to 15 kHz, 30 kHz, 60 kHz, 120 kHz, and 240 kHz.

### 3. Primary cell and secondary cell

In dual connectivity (dual connectivity, DC), a terminal device may establish connections to a plurality of cells that are divided into two groups: a master cell group (master cell group, MCG) and a secondary cell group (secondary cell group, SCG).

The MCG includes one primary cell, and may further include one or more secondary cells. Similarly, the SCG includes one primary cell, and may further include one or more secondary cells. The primary cell in the MCG is referred to as a primary cell (primary cell, PCell), the primary cell in the SCG is referred to as a primary secondary cell (primary secondary cell, PSCell), and other cells in the MCG and the SCG are secondary cells (secondary cells, SCells).

The PCell in the MCG and the SCell in the MCG are combined by using a carrier aggregation (carrier aggregation, CA) technology. The PSCell in the SCG and the SCell in the SCG are also combined by using the CA technology.

Unless otherwise specified, the primary cell in embodiments of this application may be the primary cell in the MCG or the primary cell in the SCG.

### 4. Cell and carrier

The cell is described from a perspective of resource management or mobility management by a higher layer (for example, a protocol layer above a physical layer, like a radio resource control layer or a media access control layer). Coverage of each network device may be divided into one or more cells. In an NR system, one downlink carrier may be configured for one cell, and optionally, at least one uplink carrier is further configured for the cell. The cell is a general name. For a terminal device, a cell that provides a service for the terminal device is referred to as a serving cell. The cell in this application may alternatively be the serving cell.

### 5. Self-scheduling and cross-carrier scheduling

A cell for sending a control channel corresponding to a data channel is referred to as a scheduling cell (scheduling cell), and may also be referred to as a scheduling-dominant cell. A cell for sending the data channel is referred to as a scheduled cell (scheduled cell).

Data in a cell is scheduled on a PDCCH in the cell, which is referred to as self-scheduling. In other words, a downlink carrier of a cell carries a control channel, and uplink and downlink data channel scheduling of the cell is performed, which is referred to as self-scheduling. In self-scheduling, the cell is both a scheduling cell and a scheduled cell.

Data of one cell is scheduled on a PDCCH of another cell, which is referred to as cross-carrier scheduling. In other words, a downlink carrier of one cell carries a control channel, and uplink and downlink data channel scheduling of another cell is performed, which is referred to as cross carrier scheduling (cross carrier scheduling, CCS). In cross-carrier scheduling, a cell for carrying the PDCCH is a scheduling-dominant cell or a scheduling cell, and a cell for carrying data (uplink data or downlink data) is called a scheduled cell.

Optionally, in cross-carrier scheduling, one scheduling cell may correspond to a plurality of scheduled cells. In other words, one scheduling cell may send a control channel to perform data scheduling of a plurality of scheduled cells.

### 6. PDCCH candidate and DCI format

The access network device configures a group of PDCCH candidates (candidates) for the terminal device. One PDCCH candidate may include L={1, 2, 4, 8, 16} control channel elements (control channel elements, CCEs). Herein, L is referred to as an aggregation level (aggregation level, AL) of the PDCCH. One CCE includes six resource-element groups (resource-element groups, REGs). The REG is a unit of a time-frequency resource block, is an orthogonal frequency-division multiplexing (OFDM, orthogonal frequency-division multiplexing) symbol in time domain, and is a resource block (RB, Resource Block) in frequency domain. A search space (search space) whose AL is L is defined as a set including several PDCCH candidates whose sizes are L CCEs. A search space set (search space set) is a set of search spaces including different ALs. One search space set is associated with one control resource set (control resource set, CORESET).

Correspondingly, the terminal device monitors (monitor) the group of PDCCH candidates. Monitoring is that PDCCH decoding is performed on each PDCCH candidate based on a to-be-detected downlink control information (downlink control information, DCI) format (format).

There are a plurality of DCI formats: DCI format 0_0, DCI format 1_0, DCI format 0_1, DCI format 1_1, DCI format 0_2, DCI format 1_2, DCI format 0_3, and DCI format 1_3. Details are as follows:
(1) DCI format 0_0, DCI format 1_0, DCI format 0_1, DCI format 1_1, DCI format 0_2 and DCI format 1_2 are single-cell scheduling DCI formats.

The single-cell scheduling DCI format may also be referred to as a single-carrier scheduling DCI format. The single-cell scheduling DCI format can be used to schedule data of a maximum of one cell for transmission.

If a format of one piece of DCI is any one of DCI format 0_0, DCI format 0_1, and DCI format 0_2, the DCI can be used to schedule PUSCH transmission on a maximum of one uplink carrier of one cell. If a format of one piece of DCI is any one of DCI format 1_0, DCI format 1_1, and DCI format 1_2, the DCI can be used to schedule PDSCH transmission on a maximum of one downlink carrier of one cell.

(2) DCI format 0_3 and DCI format 1_3 are multi-cell scheduling DCI formats.

The multi-cell scheduling DCI format may also be referred to as a multi-carrier scheduling DCI format. The multi-cell scheduling DCI format may be used to simultaneously schedule data of at least two cells for transmission.

If a format of one piece of DCI is DCI format 0_3, the DCI can be used to schedule PUSCH transmission on one uplink carrier in each of two or more cells. If a format of one piece of DCI is DCI format 1_3, the DCI can be used to schedule PDSCH transmission on one downlink carrier in each of two or more cells.

In a PDCCH candidate, because the access network device may send or may not send one piece of DCI of the terminal device, a monitoring result of the terminal device may be that the DCI is detected (detected), or may be that no DCI is detected; or in other words, a monitoring result of the terminal device may be that a PDCCH is detected, or the PDCCH may not be detected.

After the foregoing concepts are described, the following describes a problem to be resolved by the communication method in this application.

When the terminal device monitors the PDCCH, two operations have great impact on implementation complexity of the terminal device:
(1) a quantity of monitored PDCCH candidates, also referred to as a quantity of blind detection (blind detection, BD); and
(2) a quantity of non-overlapping CCEs, where the CCEs that are associated with a same CORESET and whose time-frequency resources overlap are considered as overlapping CCEs, and other CCEs are considered as non-overlapping CCEs. In other words, CCEs that meet different CORESET sequence numbers or different start symbols of PDCCH candidates are considered as non-overlapping CCEs.

Usually, a larger quantity of PDCCH candidates monitored by the terminal device indicates higher decoding complexity of the terminal device. A larger quantity of non-overlapping CCEs in the PDCCH candidates monitored by the terminal device indicates higher channel estimation complexity of the terminal device. In other words, a larger quantity of PDCCH candidates monitored by the terminal device or a larger quantity of non-overlapping CCEs indicates higher complexity of the terminal device.

To reduce complexity of monitoring a PDCCH by the terminal, an upper limit of a quantity of PDCCH candidates monitored by the terminal device in a cell per time unit and an upper limit of a quantity of non-overlapping CCEs are preset in a protocol, and are also referred to as a BD/CCE upper limit. Alternatively, from another perspective, to reduce complexity of monitoring a PDCCH by the terminal, a quantity of BD corresponding to all PDCCH candidates that are monitored by the terminal device in a time unit and on which BD counting or non-overlapping CCE counting is performed in a same cell should be less than or equal to a BD upper limit of the cell, a quantity of corresponding non-overlapping CCEs is less than or equal to a CCE upper limit of the cell.

The unit time herein may be a slot (slot), a time span (span), several orthogonal frequency division multiplexing (orthogonal frequency division multiplexing, OFDM) symbols, or several slots. The span is several consecutive OFDM symbols in one slot.

Specifically, in a current protocol, when the terminal device performs BD counting/non-overlapping CCE counting, the access network device and the terminal device perform, in a cell scheduled by DCI in a single-cell scheduling DCI format, BD counting/non-overlapping CCE counting on a PDCCH candidate that is capable of being used to carry the DCI in the single-cell scheduling DCI format.

In addition, if a cell scheduled by the DCI in the single-cell scheduling DCI format and one or more other scheduled cells are scheduled together by DCI in a multi-cell scheduling DCI format, a PDCCH candidate that is capable of being used to carry the DCI of the multi-cell scheduling DCI format may also be indicated to be BD counted/non-overlapping CCE counted in a cell scheduled by the DCI of the single-cell scheduling DCI format.

For example, as shown in FIG. 2, the access network device sends, in a cell 1, DCI that is in a single-cell scheduling DCI format and that is used to schedule data transmission in the cell 1, the access network device sends, in a cell 2, DCI that is in a single-cell scheduling DCI format and that is used to schedule data transmission in the cell 2, and the access network device sends, in a cell 3, DCI that is in a single-cell scheduling DCI format and that is used to schedule data transmission in the cell 3. In addition, the access network device sends, in a cell 4, DCI in a multi-cell scheduling DCI format, and the DCI in the multi-cell scheduling DCI format may be used to simultaneously schedule data transmission in the cell 1, the cell 2, and the cell 3.

In this case, the terminal device performs, in the cell 1, BD counting/non-overlapping CCE counting on a PDCCH candidate that is capable of being used to carry DCI used to schedule data transmission in the cell 1, performs, in the cell 2, BD counting/non-overlapping CCE counting on a PDCCH candidate that is capable of being used to carry DCI used to schedule data transmission in the cell 2, and performs, in the cell 3, BD counting/non-overlapping CCE counting on a PDCCH candidate that is capable of being used to carry DCI used to schedule data transmission in the cell 3. In addition, a PDCCH candidate that is capable of being used to carry DCI in a multi-cell scheduling DCI format may be indicated to be BD counted/non-overlapping CCE counted in the cell 1.

In some embodiments, when the scheduled cell is a secondary cell, in each unit time, a configuration of the access network device directly ensures that a quantity of BD corresponding to all PDCCH candidates on which BD/CCE counting is performed in the scheduled cell is less than or equal to a BD upper limit of the scheduled cell, and a total quantity of corresponding non-overlapping CCEs is less than or equal to a CCE upper limit of the scheduled cell.

In some embodiments, when the scheduled cell is a primary cell, in specific unit time, a quantity of BD/CCEs that is/are configured by the access network device and that corresponds to all PDCCH candidates on which BD/CCE counting is performed in the scheduled cell may be greater than a BD upper limit/a CCE upper limit of the scheduled cell. In this case, the access network device and the terminal device give up monitoring some PDCCH candidates according to a method specified in a protocol, to ensure that, in the unit time, a quantity of BD corresponding to all PDCCH candidates that are actually monitored by the terminal device and on which BD/CCE counting is performed in the scheduled cell is less than or equal to a BD upper limit of the cell, and a total quantity of corresponding non-overlapping CCEs is less than or equal to a CCE upper limit of the cell.

However, the foregoing manner has low flexibility of scheduling the PDCCH by the access network device. A reason is that, generally, DCI in a multi-cell scheduling DCI format occupies a large quantity of CCEs. In addition, the DCI in the multi-cell scheduling DCI format may require a large quantity of PDCCH candidates. Therefore, to improve scheduling flexibility of the DCI in the multi-cell scheduling DCI format, more scheduling opportunities need to be provided for the DCI in the multi-cell scheduling DCI format. However, in the conventional technology, when both a PDCCH candidate associated with DCI that is in a single-cell scheduling DCI format and that is used to schedule data transmission in a target cell and a PDCCH candidate associated with DCI that is in a multi-cell scheduling DCI format and that is used to schedule data transmission in at least one cell perform BD counting/CCE counting in the target cell, the PDCCH candidate associated with the DCI in the multi-cell scheduling DCI format may not be monitored in the target cell.

In view of this, embodiments of this application provide a communication method and a communication apparatus, to improve flexibility of scheduling a PDCCH by an access network device.

The following describes a communication method according to an embodiment of this application.

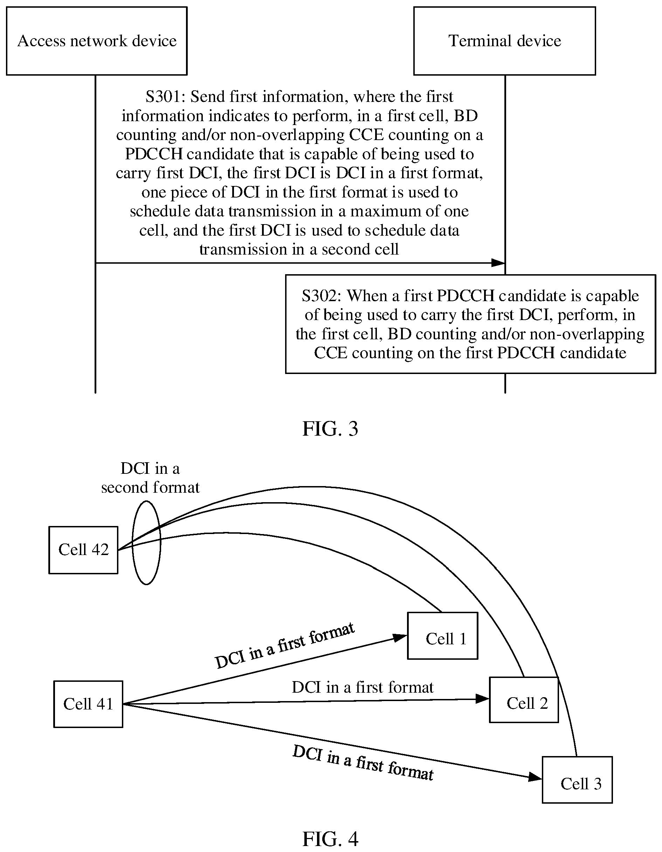

FIG. 3 is a schematic flowchart of a communication method according to an embodiment of this application. As shown in FIG. 3, the method includes the following steps.

S301: An access network device sends first information to a terminal device, where the first information indicates to perform, in a first cell, BD counting and/or non-overlapping CCE counting on a PDCCH candidate that is capable of being used to carry first DCI, the first DCI is DCI in a first format, one piece of DCI in the first format is used to schedule data transmission in a maximum of one cell, and the first DCI is used to schedule data transmission in a second cell.

In this embodiment of this application, a PDCCH candidate that is capable of being used to carry the first DCI is also referred to as a PDCCH candidate associated with the first DCI.

That one piece of DCI in the first format schedules data transmission in a maximum of one cell may also be described as that one piece of DCI in the first format schedules data transmission in a maximum of one carrier. In other words, the first format is the single-cell scheduling DCI format described above, or is also referred to as a single-carrier scheduling DCI format.

In this embodiment of this application, that the first information indicates the terminal device to perform, in the first cell, BD counting and/or non-overlapping CCE counting on a PDCCH candidate that is capable of being used to carry the first DCI may also be described as that the first information indicates the terminal device to perform, in the first cell, BD counting and/or the non-overlapping CCE counting on the PDCCH candidate associated with the first DCI.

Specifically, in this embodiment of this application, the first DCI is used to schedule data transmission in the second cell. In other words, the PDCCH candidate associated with the first DCI in this embodiment is a PDCCH candidate used to schedule data transmission in the second cell.

In other words, in this embodiment, the access network device sends the first information to the terminal device, to indicate the terminal device to perform, in the first cell, BD counting and/or non-overlapping CCE counting on the PDCCH candidate associated with the DCI that is in the first format and that is used to schedule data transmission in the second cell. In other words, the access network device sends the first information to the terminal device, to indicate BD counting and/or non-overlapping CCE counting on the PDCCH candidate associated with the DCI that is in the first format and that is used to schedule data transmission in the second cell are/is performed by the terminal device in the first cell.

S302: When a first PDCCH candidate is capable of being used to carry the first DCI, perform, in the first cell, BD counting and/or non-overlapping CCE counting on the first PDCCH candidate.

In other words, in this embodiment of this application, if the terminal device determines that the first PDCCH candidate is capable of being used to carry the first DCI, the terminal device performs, in the first cell, BD counting and/or non-overlapping CCE counting on the first PDCCH candidate.

In other words, the terminal device performs, in the first cell, BD counting and/or non-overlapping CCE counting on a PDCCH candidate associated with DCI that is in the first format and that is used to schedule data transmission in the second cell.

In other words, the terminal device performs, in the first cell, BD counting and/or non-overlapping CCE counting on a PDCCH candidate associated with DCI that is in the first format and that is used to schedule data transmission in the second cell.

As described above, the DCI in the second format usually occupies a large quantity of CCEs. In addition, the DCI in the second format may require a large quantity of PDCCH candidates. Therefore, to improve scheduling flexibility of the DCI in the second format, more scheduling opportunities need to be provided for the DCI in the second format. However, if the method in the conventional technology is used, that is, BD counting and/or non-overlapping CCE counting is performed, in the second cell, on the first PDCCH candidate associated with the first DCI in the second format, and BD counting and/or non-overlapping CCE counting is also performed, in the second cell, on the PDCCH candidate associated with the DCI, a scheduling opportunity of a PDCCH candidate associated with the DCI in the second format may be insufficient. However, according to the solution provided in the embodiment shown in FIG. 3 of this application, when BD counting and/or CCE counting are/is performed, in the first cell, on the PDCCH candidate associated with the first DCI that is in the first format and that is used to schedule the second cell, more BD and/or non-overlapping CCEs can be provided for PDCCH candidates that can be used to carry the DCI in the second format and on which BD counting and/or CCE counting need/needs to be performed in the second cell. In this way, the DCI in the second format is more likely to be sent. Therefore, according to the communication method provided in this embodiment of this application, scheduling flexibility of the PDCCH candidate that is capable of being used to carry the DCI in the second format can be improved, that is, sending flexibility of the DCI in the second format of the access network device is improved.

It should be noted herein that the foregoing is described from a perspective of the terminal device. It should be understood that, similar to the terminal device, the access network device also performs, in the first cell, blind detection BD counting and/or non-overlapping control channel element CCE counting on the first PDCCH candidate when the first PDCCH candidate is capable of being used to carry the first DCI, to be specific, the access network device also performs, in the first cell, BD counting and/or non-overlapping CCE counting on a PDCCH candidate associated with the DCI that is in the first format and that is used to schedule data transmission in the second cell, to ensure consistency between a network side and a terminal side.

In an optional embodiment, in the embodiment shown in FIG. 3, S301 may be an optional step. In other words, there is no step in which the access network device sends the first information to the terminal device to indicate the terminal device to perform, in the first cell, BD counting and/or non-overlapping CCE counting on a PDCCH candidate that is capable of being used to carry the first DCI. For example, during implementation, it is specified in a protocol in advance that the access network device and the terminal device perform, in the first cell, BD counting and/or non-overlapping CCE counting on the PDCCH candidate that is capable of being used to carry the first DCI.

In an optional embodiment, in this embodiment of this application, that the terminal device performs, in the first cell, blind detection BD counting and/or non-overlapping control channel element CCE counting on the first PDCCH candidate includes: if BD counting and/or non-overlapping CCE counting are/is performed, in the second cell, on a PDCCH candidate that is capable of being used to carry second DCI, performing, in the first cell, BD counting and/or non-overlapping CCE counting on the first PDCCH candidate. The second DCI is DCI in a second format, one piece of DCI in the second format is capable of being used to simultaneously schedule data transmission in two or more cells, and a cell that is capable of being scheduled by using one piece of DCI in the second format includes the second cell.

The second format is the multi-cell scheduling DCI format described above, or may be referred to as a multi-carrier scheduling DCI format.

That one piece of DCI in the second format can simultaneously schedule data transmission in two or more cells may also be described as that one piece of DCI in the second format can simultaneously schedule data transmission in two or more carriers.

In this embodiment, a cell that can be scheduled by using one piece of DCI in the second format includes the second cell, and BD counting and/or non-overlapping CCE counting is performed, in the second cell, on a PDCCH candidate carrying the second DCI.

In other words, this embodiment further limits a case in which, only when the second cell is a cell of counting BD and/or non-overlapping CCEs on a PDCCH candidate that can be used to carry the DCI in the second format, BD counting and/or non-overlapping CCE counting are/is performed, in the first cell, on the first PDCCH candidate.

In some embodiments, the DCI that is in the first format and that is used to schedule the second cell is DCI sent by the access network device in the second cell. In other words, the access network device schedules data transmission in the second cell in a self-scheduling manner.

FIG. 2 is used as an example for description. As shown in FIG. 2, the access network device can send, in a cell 1, DCI that is in a single-cell scheduling DCI format (that is, a first format) and that is used to schedule data transmission in the cell 1, the access network device can send, in a cell 2, DCI that is in a single-cell scheduling DCI format and that is used to schedule data transmission in the cell 2, and the access network device can send, in a cell 3, DCI that is in a single-cell scheduling DCI format and that is used to schedule data transmission in the cell 3, that is, the access network device schedules data transmission in the cell 1, data transmission in the cell 2, and data transmission in the cell 3 in a self-scheduling manner. In addition, the access network device can send DCI in a multi-cell scheduling DCI format (namely, the second format) in the cell 4, and the DCI in the multi-cell scheduling DCI format may be used to simultaneously schedule data transmission in the cell 1, the cell 2, and the cell 3. It should be noted that, based on a higher layer parameter configuration, one piece of DCI in a multi-cell scheduling DCI format may be used to separately schedule data transmission in one of the cell 1, the cell 2, and the cell 3, or simultaneously schedule data transmission in two of the cell 1, the cell 2, and the cell 3; or simultaneously schedule data transmission in the cell 1, the cell 2, and the cell 3. In the conventional technology, BD counting and/or non-overlapping CCE counting is performed, in the cell 1, on a PDCCH candidate that is capable of being used to carry DCI that is in the first format and that is used to schedule data transmission in the cell 1, BD counting and/or non-overlapping CCE counting is performed, in the cell 2, on a PDCCH candidate that is capable of being used to carry DCI that is in the first format and that is used to schedule data transmission in the cell 2, and BD counting and/or non-overlapping CCE counting is performed, in the cell 3, on a PDCCH candidate that is capable of being used to carry DCI that is in the first format and that is used to schedule data transmission in the cell 3. However, in this embodiment, if BD counting and/or non-overlapping CCE counting is performed, in the cell 1, on a PDCCH candidate associated with the DCI in the second format sent by the access network device in the cell 4, the terminal device may perform, in a cell other than the cell 1, BD counting and/or non-overlapping CCE counting on the PDCCH candidate that is capable of being used to carry the DCI that is in the first format and that is used to schedule data transmission in the cell 1. Specifically, a specific cell of the another cell may be agreed on in advance in a protocol, or may be indicated by the access network device.

For example, BD counting and/or non-overlapping CCE counting may be performed, in the cell 2, on the PDCCH candidate that is capable of being used to carry the DCI that is in the first format and that is used to schedule data transmission in the cell 1. In this case, the cell 1 may be considered as the second cell, and the cell 2 may be considered as the first cell.

For example, BD counting and/or non-overlapping CCE counting may be performed, in the cell 3, on the PDCCH candidate that is capable of being used to carry the DCI that is in the first format and that is used to schedule data transmission in the cell 1. In this case, the cell 1 may be considered as the second cell, and the cell 3 may be considered as the first cell.

In some embodiments, the DCI that is in the first format and that is used to schedule the second cell is DCI sent by the access network device in a cell other than the second cell. In other words, the access network device schedules data transmission in the second cell in a cross-carrier scheduling manner.

FIG. 4 is used as an example. The access network device can send, in a cell 41, DCI that is in the first format and that is used to schedule data transmission in a cell 1, DCI that is in the first format and that is used to schedule data transmission in a cell 2, and DCI that is in the first format and that is used to schedule data transmission in a cell 3. In addition, the access network device can send the DCI in the second format in a cell 42, and the DCI in the second format may be used to simultaneously schedule data transmission in the cell 1, the cell 2, and the cell 3. It should be noted that, based on a higher layer parameter configuration, one piece of DCI in the second format may be used to separately schedule data transmission in one of the cell 1, the cell 2, and the cell 3, or simultaneously schedule data transmission in two of the cell 1, the cell 2, and the cell 3; or simultaneously schedule data transmission in the cell 1, the cell 2, and the cell 3. In the conventional technology, BD counting and/or non-overlapping CCE counting is performed, in the cell 1, on a PDCCH candidate that is capable of being used to carry DCI that is in the first format and that is used to schedule data transmission in the cell 1, BD counting and/or non-overlapping CCE counting is performed, in the cell 2, on a PDCCH candidate that is capable of being used to carry DCI that is in the first format and that is used to schedule data transmission in the cell 2, and BD counting and/or non-overlapping CCE counting is performed, in the cell 3, on a PDCCH candidate that is capable of being used to carry DCI that is in the first format and that is used to schedule data transmission in the cell 3. However, in this embodiment, if BD counting and/or non-overlapping CCE counting is performed, in the cell 1, on a PDCCH candidate associated with the DCI in the second format sent by the access network device in the cell 42, the terminal device may perform, in a cell other than the cell 1, BD counting and/or non-overlapping CCE counting on the PDCCH candidate that is capable of being used to carry the DCI that is in the first format and that is used to schedule data transmission in the cell 1. Specifically, a specific cell of the another cell may be agreed on in advance in a protocol, or may be indicated by the access network device.

In an optional embodiment, in this embodiment of this application, that the terminal device performs, in the first cell, BD counting and/or non-overlapping CCE counting on the first PDCCH candidate includes: if the first PDCCH candidate and a PDCCH candidate that is capable of being used to carry third DCI are in a same cell, performing, in the first cell, BD counting and/or non-overlapping CCE counting on the first PDCCH candidate. The third DCI is DCI in the first format, and the third DCI is used to schedule data transmission in the first cell. That the first PDCCH candidate and the PDCCH candidate that is capable of being used to carry the third DCI are in a same cell may be understood as that the first PDCCH candidate and the PDCCH candidate that is capable of being used to carry the third DCI are on a same bandwidth part BWP of the same cell, and the BWP may be an active downlink BWP of the cell.

In other words, this embodiment further limits a case in which, only when the PDCCH candidate associated with the DCI that is in the first format and that is used to schedule the second cell and the PDCCH candidate associated with the DCI that is in the first format and that is used to schedule the first cell are in a same cell, the terminal device performs, in the first cell, BD counting and/or non-overlapping CCE counting on the PDCCH candidate associated with the DCI that is in the first format and that is used to schedule the second cell.

FIG. 2 and FIG. 4 are used as examples for description. There is a case when a method is limited, that is, only when the PDCCH candidate associated with the DCI that is in the first format and that is used to schedule the second cell and the PDCCH candidate associated with the DCI that is in the first format and that is used to schedule the first cell are in a same cell, the terminal device performs, in the first cell, BD counting and/or non-overlapping CCE counting on the PDCCH candidate associated with the DCI that is in the first format and that is used to schedule the second cell. For the scenario shown in FIG. 2, because the PDCCH candidate associated with the DCI that is in the first format and that is used to schedule the cell 1 and the PDCCH candidate associated with the DCI that is in the first format and that is used to schedule the cell 2 are not in a same cell, the terminal device does not perform, in the first cell, BD counting and/or non-overlapping CCE counting on a PDCCH candidate associated with the DCI that is in the first format and that is used to schedule the second cell. However, for the scenario shown in FIG. 4, because the PDCCH candidate associated with the DCI that is in the first format and that is used to schedule the cell 1 and the PDCCH candidate associated with the DCI that is in the first format and that is used to schedule the cell 2 are sent in a same cell, the terminal device may perform, in the cell 2, BD counting and/or non-overlapping CCE counting on a PDCCH candidate associated with the DCI that is in the first format and that is used to schedule the cell 1.

In an optional embodiment, in this embodiment of this application, that the terminal device performs, in the first cell, BD counting and/or non-overlapping CCE counting on the first PDCCH candidate includes: if a subcarrier spacing of the first PDCCH candidate is the same as a subcarrier spacing of a PDCCH candidate that is capable of being used to carry fourth DCI, performing, in the first cell, BD counting and/or non-overlapping CCE counting on the first PDCCH candidate, where the fourth DCI is DCI in the first format, and the fourth DCI is used to schedule data transmission in the first cell. In other words, in this embodiment of this application, only when the subcarrier spacing of the first PDCCH candidate is the same as the subcarrier spacing of the PDCCH candidate that is capable of being used to carry the fourth DCI, the terminal device performs, in the first cell, BD counting and/or non-overlapping CCE counting on the PDCCH candidate associated with the DCI that is in the first format and that is used to schedule the second cell. In this embodiment of this application, the first PDCCH candidate and the PDCCH candidate that is capable of being used to carry the fourth DCI are on an active downlink BWP of a same cell, or the first PDCCH candidate is on an active downlink BWP of a cell, a PDCCH candidate that is capable of being used to carry the fourth DCI is on an active downlink BWP of another cell, and subcarrier spacings of the two active downlink BWPs are the same.

It should be understood that, usually, the access network device further configures information about at least one first PDCCH candidate for the terminal device.

In this embodiment of this application, the information about the at least one first PDCCH candidate configured by the access network device is also referred to as second information. In some embodiments, the second information includes one or more aggregation levels of PDCCH candidates that can carry the DCI that is in the first format and that is used to schedule data transmission in the second cell, and a quantity of PDCCH candidates at each aggregation level. The terminal device may determine, based on the second information, a time-frequency resource of a PDCCH candidate that can carry the DCI that is in the first format and that is used to schedule data transmission in the second cell. For example, the second information may be search space set configuration information. Based on the second information, the terminal device may monitor the at least one first PDCCH candidate in the configured first format. It should be noted that a time sequence of sending the first information and the second information is uncertain. The first information may be sent before the second information, or the second information may be sent before the first information, or the first information and the second information are simultaneously sent.

In this embodiment, when the access network device sends the second information, because the second information includes a quantity of the at least one first PDCCH candidate, a time-frequency resource of the at least one first PDCCH candidate may be further determined based on the second information, the access network device determines the second information based on a BD upper limit corresponding to the first cell and/or a non-overlapping CCE upper limit corresponding to the first cell. In this way, when the first cell is a primary cell, in a unit time, the access network device can ensure that BD counting and/or non-overlapping CCE counting on the PDCCH candidate that can be used to send the DCI are/is performed in the first cell, BD and/or non-overlapping CCEs that correspond to all PDCCH candidates of the first cell and that are counted do/do not exceed a BD upper limit of the first cell and/or a non-overlapping CCE upper limit of the first cell that are/is specified in the unit time. When the first cell is a secondary cell, the access network device may ensure that BD counting and/or non-overlapping CCE counting on a PDCCH candidate that is capable of being used to carry DCI and that are/is configured in the unit time are/is counted in the first cell, BD and/or non-overlapping CCEs that correspond to all PDCCH candidates of the first cell and that are counted do/do not exceed a BD upper limit or a non-overlapping CCE upper limit of the first cell that is specified in the unit time.

For concepts of the BD upper limit and the non-overlapping CCE upper limit, refer to the descriptions in the foregoing related part. Details are not described herein again.

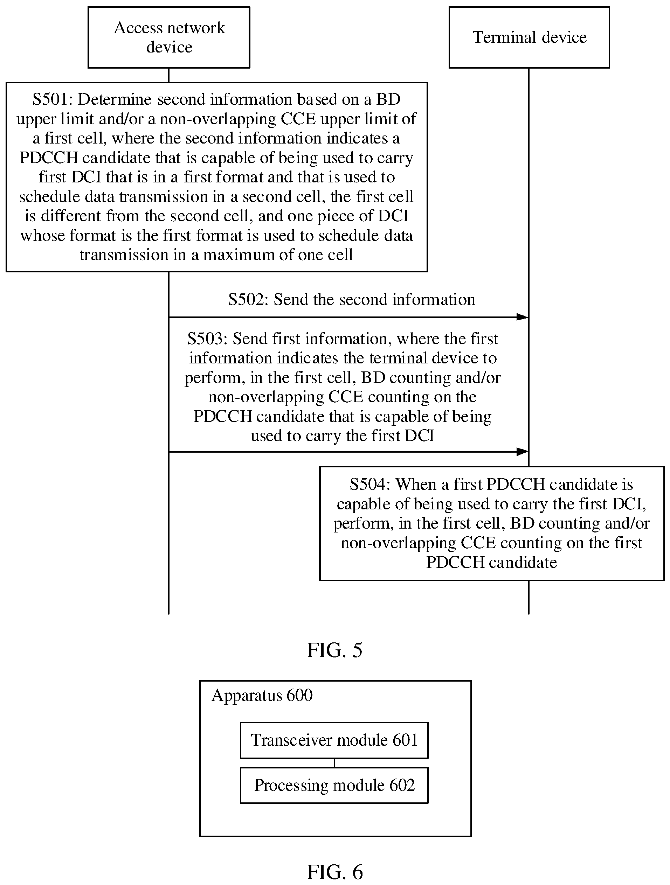

The following describes a detailed embodiment with reference to FIG. 5. As shown in FIG. 5, the method includes the following steps.

S501: Determine second information based on a BD upper limit and/or a non-overlapping CCE upper limit of a first cell, where the second information indicates a PDCCH candidate that is capable of being used to carry first DCI that is in a first format and that is used to schedule data transmission in a second cell, the first cell is different from the second cell, and one piece of DCI whose format is the first format is used to schedule data transmission in a maximum of one cell.

For detailed descriptions of the first DCI and the first format, refer to the descriptions in the foregoing embodiment. Details are not described herein again.

S502: An access network device sends the second information to a terminal device, and the terminal device receives the second information.

S503: The access network device sends first information to the terminal device, and the terminal device receives the first information, where the first information indicates the terminal device to perform, in the first cell, BD counting and/or non-overlapping CCE counting on the PDCCH candidate that is capable of being used to carry the first DCI.

S504: When a first PDCCH candidate is capable of being used to carry the first DCI, the terminal device performs, in the first cell, BD counting and/or non-overlapping CCE counting on the first PDCCH candidate.

It should be noted herein that there is no strict sequence between S501 and S502. The first information may be sent earlier than the second information, or may be sent later than the second information, or the first information and the second information may be sent simultaneously.

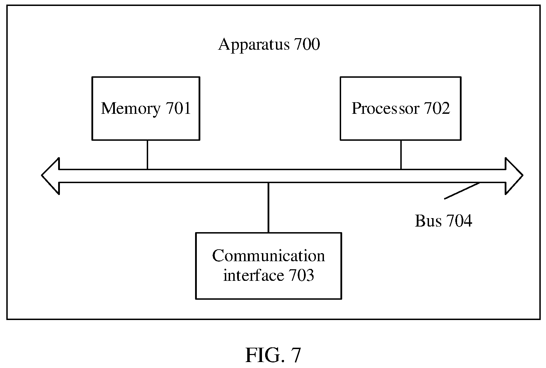

The foregoing describes in detail the communication method in embodiments of this application with reference to FIG. 3 to FIG. 5. The following describes a communication apparatus in embodiments of this application with reference to FIG. 6 and FIG. 7.

FIG. 6 is a diagram of a structure of a communication apparatus according to an embodiment of this application. Specifically, as shown in FIG. 6, the apparatus 600 includes a transceiver module 601 and a processing module 602.

In a first embodiment, the communication apparatus is used in a terminal device.

Specifically, in a first embodiment, the processing module 602 is configured to: when a first PDCCH candidate is capable of being used to carry first DCI, perform, in a first cell, blind detection BD counting and/or non-overlapping control channel element CCE counting on the first PDCCH candidate, where the first DCI is DCI in a first format, one piece of DCI in the first format is used to schedule data transmission in a maximum of one cell, the first DCI is used to schedule data transmission in a second cell, and the first cell is different from the second cell.

In a possible implementation, the transceiver module 601 is configured to receive first information sent by an access network device, where the first information indicates the terminal device to perform, in the first cell, BD counting and/or non-overlapping CCE counting on a PDCCH candidate that is capable of being used to carry the first DCI.

In a possible implementation, the processing module 602 is specifically configured to: if BD counting and/or non-overlapping CCE counting are/is performed, in the second cell, on a PDCCH candidate that is capable of being used to carry second DCI, perform, in the first cell, BD counting and/or non-overlapping CCE counting on the first PDCCH candidate. The second DCI is DCI in a second format, one piece of DCI in the second format is capable of being used to simultaneously schedule data transmission in two or more cells, and a cell that is capable of being scheduled by using one piece of DCI in the second format includes the second cell.

In a possible implementation, the processing module 602 is specifically configured to: if the first PDCCH candidate and a PDCCH candidate that is capable of being used to carry third DCI are in a same cell, perform, in the first cell, BD counting and/or non-overlapping CCE counting on the first PDCCH candidate. The third DCI is DCI in the first format, and the third DCI is used to schedule data transmission in the first cell.

In a possible implementation, the processing module 602 is specifically configured to: if a subcarrier spacing of the first PDCCH candidate is the same as a subcarrier spacing of a PDCCH candidate that is capable of being used to carry fourth DCI, perform, in the first cell, BD counting and/or non-overlapping CCE counting on the first PDCCH candidate. The fourth DCI is DCI in the first format, and the fourth DCI is used to schedule data transmission in the first cell.

In a possible implementation, the transceiver module is further configured to receive second information sent by the access network device. The second information is used to configure a PDCCH candidate that is capable of being used to carry DCI for scheduling data transmission in the second cell. The second information is determined based on a BD upper limit corresponding to the first cell and/or a non-overlapping CCE upper limit corresponding to the first cell.

In a second embodiment, the communication apparatus is used in an access network device.

Specifically, in a second embodiment, the transceiver module 601 is configured to send first information to a terminal device, where the first information indicates the terminal device to perform, in a first cell, BD counting and/or non-overlapping CCE counting on a PDCCH candidate that is capable of being used to carry first DCI. The first DCI is DCI in a first format, one piece of DCI in the first format is used to schedule data transmission in a maximum of one cell, the first DCI is used to schedule data transmission in a second cell, and the first cell is different from the second cell.

In a possible implementation, the transceiver module 601 is further configured to send second information to the terminal device, where the second information is used to configure a PDCCH candidate that is capable of being used to carry the first DCI for scheduling data transmission in the second cell. The second information is determined based on a BD upper limit corresponding to the first cell and/or a non-overlapping CCE upper limit corresponding to the first cell.

FIG. 7 is a diagram of a structure of a communication apparatus according to another embodiment of this application. The apparatus shown in FIG. 7 may be configured to perform the method according to any one of the foregoing embodiments.

As shown in FIG. 7, the apparatus 700 in this embodiment includes a memory 701 and a processor 702. Optionally, the apparatus 700 further includes a communication interface 703 and a bus 704. A communication connection among the memory 701, the processor 702, and the communication interface 703 is implemented through the bus 704.

The memory 701 may be a read-only memory (read-only memory, ROM), a static storage device, a dynamic storage device, or a random access memory (random access memory, RAM). The memory 701 may store a program. When the program stored in the memory 701 is executed by the processor 702, the processor 702 is configured to perform the steps of the methods shown in FIG. 3 to FIG. 5.

The processor 702 may use a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 3 to FIG. 5 in this application.

Alternatively, the processor 702 may be an integrated circuit chip, and has a signal processing capability. In an implementation process, the steps of the methods in FIG. 3 to FIG. 5 in embodiments of this application may be completed by using an integrated logic circuit of hardware or an instruction in a form of software in the processor 702.

The processor 702 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor, a function that needs to be executed by a unit included in the apparatus in this application, for example, may perform the steps or execute the functions in the embodiments shown in FIG. 3 to FIG. 5.

The communication interface 703 may use, but is not limited to, a transceiver apparatus of a transceiver type, to implement communication between the apparatus 700 and another device or a communication network.

The bus 704 may include a path for transferring information between components (such as the memory 701, the processor 702, and the communication interface 703) of the apparatus 700.

It should be understood that the apparatus 700 shown in this embodiment of this application may be an electronic device, or may be a chip configured in an electronic device. The apparatus 700 may be deployed in a terminal device, or may be deployed in a network device.

All or some of the foregoing embodiments may be implemented by using software, hardware, firmware, or any combination thereof. When software is used to implement the embodiments, all or some of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are only examples. For example, division into the units is only logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, and comprising:
when a first PDCCH candidate is capable of being used to carry first DCI, performing, in a first cell, blind detection BD counting and/or non-overlapping control channel element CCE counting on the first PDCCH candidate, wherein the first DCI is DCI in a first format, one piece of DCI in the first format is used to schedule data transmission in a maximum of one cell, the first DCI is used to schedule data transmission in a second cell, and the first cell is different from the second cell.

2. The method according to claim 1, wherein the method further comprises:
receiving first information sent by an access network device, wherein the first information indicates the terminal device to perform, in the first cell, BD counting and/or non-overlapping CCE counting on a PDCCH candidate that is capable of being used to carry the first DCI.

3. The method according to claim 1 or 2, wherein performing, in the first cell, blind detection BD counting and/or non-overlapping control channel element CCE counting on the first PDCCH candidate comprises:
if BD counting and/or non-overlapping CCE counting are/is performed, in the second cell, on a PDCCH candidate that is capable of being used to carry second DCI, performing, in the first cell, BD counting and/or non-overlapping CCE counting on the first PDCCH candidate, wherein
the second DCI is DCI in a second format, and one piece of DCI in the second format is capable of being used to simultaneously schedule data transmission in two or more cells.

4. The method according to any one of claims 1 to 3, wherein performing, in the first cell, blind detection BD counting and/or non-overlapping control channel element CCE counting on the first PDCCH candidate comprises:
if the first PDCCH candidate and a PDCCH candidate that is capable of being used to carry third DCI are in a same cell, performing, in the first cell, BD counting and/or non-overlapping CCE counting on the first PDCCH candidate, wherein
the third DCI is DCI in the first format, and the third DCI is used to schedule data transmission in the first cell.

5. The method according to any one of claims 1 to 3, wherein performing, in the first cell, blind detection BD counting and/or non-overlapping control channel element CCE counting on the first PDCCH candidate comprises:
if a subcarrier spacing of the first PDCCH candidate is the same as a subcarrier spacing of a PDCCH candidate that is capable of being used to carry fourth DCI, performing, in the first cell, BD counting and/or non-overlapping CCE counting on the first PDCCH candidate, wherein
the fourth DCI is DCI in the first format, and the fourth DCI is used to schedule data transmission in the first cell.

6. The method according to any one of claims 1 to 5, wherein the method further comprises:
receiving second information sent by the access network device, wherein the second information is used to configure at least one first PDCCH candidate, wherein
the second information is determined based on a BD upper limit corresponding to the first cell and/or a non-overlapping CCE upper limit corresponding to the first cell.

7. A communication method, applied to an access network device, and comprising:
sending first information to a terminal device, wherein the first information indicates the terminal device to perform, in a first cell, BD counting and/or non-overlapping CCE counting on a PDCCH candidate that is capable of being used to carry first DCI, wherein
the first DCI is DCI in a first format, one piece of DCI in the first format is used to schedule data transmission in a maximum of one cell, the first DCI is used to schedule data transmission in a second cell, and the first cell is different from the second cell.

8. The method according to claim 7, wherein the method further comprises:
sending second information to the terminal device, wherein the second information is used to configure at least one first PDCCH candidate, wherein
the second information is determined based on a BD upper limit corresponding to the first cell and/or a non-overlapping CCE upper limit corresponding to the first cell.

9. A communication apparatus, comprising: a processing module, configured to: when a first PDCCH candidate is capable of being used to carry first DCI, perform, in a first cell, blind detection BD counting and/or non-overlapping control channel element CCE counting on the first PDCCH candidate, wherein the first DCI is DCI in a first format, one piece of DCI in the first format is used to schedule data transmission in a maximum of one cell, the first DCI is used to schedule data transmission in a second cell, and the first cell is different from the second cell.

10. The apparatus according to claim 9, wherein the apparatus further comprises a transceiver module, and the transceiver module is configured to:
receive first information sent by an access network device, wherein the first information indicates the terminal device to perform, in the first cell, BD counting and/or non-overlapping CCE counting on a PDCCH candidate that is capable of being used to carry the first DCI.

11. The apparatus according to claim 9 or 10, wherein the processing module is specifically configured to:
if BD counting and/or non-overlapping CCE counting are/is performed, in the second cell, on a PDCCH candidate that is capable of being used to carry second DCI, perform, in the first cell, BD counting and/or non-overlapping CCE counting on the first PDCCH candidate, wherein
the second DCI is DCI in a second format, and one piece of DCI in the second format is capable of being used to simultaneously schedule data transmission in two or more cells.

12. The apparatus according to any one of claims 9 to 11, wherein the processing module is specifically configured to:
if the first PDCCH candidate and a PDCCH candidate that is capable of being used to carry third DCI are in a same cell, perform, in the first cell, BD counting and/or non-overlapping CCE counting on the first PDCCH candidate, wherein
the third DCI is DCI in the first format, and the third DCI is used to schedule data transmission in the first cell.

13. The apparatus according to any one of claims 9 to 11, wherein the processing module is specifically configured to:
if a subcarrier spacing of the first PDCCH candidate is the same as a subcarrier spacing of a PDCCH candidate that is capable of being used to carry third DCI, perform, in the first cell, BD counting and/or non-overlapping CCE counting on the first PDCCH candidate, wherein
the third DCI is DCI in the first format, and the third DCI is used to schedule data transmission in the first cell.

14. The apparatus according to any one of claims 9 to 13, wherein the transceiver module is further configured to:
receive second information sent by the access network device, wherein the second information is used to configure at least one first PDCCH candidate, wherein
the second information is determined based on a BD upper limit corresponding to the first cell and/or a non-overlapping CCE upper limit corresponding to the first cell.

15. A communication apparatus, comprising:
a transceiver module, configured to send first information to a terminal device, wherein the first information indicates the terminal device to perform, in a first cell, BD counting and/or non-overlapping CCE counting on a PDCCH candidate that is capable of being used to carry first DCI, wherein
the first DCI is DCI in a first format, one piece of DCI in the first format is used to schedule data transmission in a maximum of one cell, the first DCI is used to schedule data transmission in a second cell, and the first cell is different from the second cell.

16. The apparatus according to claim 15, wherein the transceiver module is further configured to:
send second information to the terminal device, wherein the second information is used to configure at least one first PDCCH candidate, wherein
the second information is determined based on a BD upper limit corresponding to the first cell and/or a non-overlapping CCE upper limit corresponding to the first cell.

17. A communication system, comprising the communication apparatus according to claims 9 to 14 and the communication apparatus according to claim 15 or 16.

18. A computer-readable medium, wherein the computer-readable medium stores program code for computer execution, and the program code comprises instructions for performing the method according to any one of claims 1 to 6 or claims 7 and 8.

19. A computer program product, wherein the computer program product comprises computer program code, and when the computer program code is run on a computer, the computer is enabled to implement the method according to any one of claims 1 to 6 or claims 7 and 8.

20. A chip, comprising at least one processor and a communication interface, wherein the communication interface and the at least one processor are interconnected through a line, and the at least one processor is configured to run a computer program or instructions, to perform the communication method according to any one of claims 1 to 6 or the communication method according to any one of claims 7 to 8.
